(19) Europäisches Patentamt
European Patent Office
Office européen des brevets

(11) **EP 4 664 597 A1**

(12) **EUROPEAN PATENT APPLICATION**
published in accordance with Art. 153(4) EPC

(43) Date of publication:
**17.12.2025 Bulletin 2025/51**

(21) Application number: **23961160.1**

(22) Date of filing: **14.12.2023**

(51) International Patent Classification (IPC):
**H01M 10/058** (2010.01)   **H01M 4/133** (2010.01)
**H01M 4/134** (2010.01)   **H01M 10/0525** (2010.01)

(52) Cooperative Patent Classification (CPC):
**H01M 4/133; H01M 4/134; H01M 10/0525;
H01M 10/058;** Y02E 60/10

(86) International application number:
**PCT/CN2023/138895**

(87) International publication number:
**WO 2025/123300 (19.06.2025 Gazette 2025/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **ZHENG, Donglai
Ningde, Fujian 352100 (CN)**
• **SHI, Dongyang
Ningde, Fujian 352100 (CN)**
• **MA, Hao
Ningde, Fujian 352100 (CN)**
• **LI, Baiqing
Ningde, Fujian 352100 (CN)**

(74) Representative: **Kraus & Lederer PartGmbB
Thomas-Wimmer-Ring 15
80539 München (DE)**

(54) **BATTERY CELL, BATTERY, AND ELECTRIC DEVICE**

(57) The present application discloses a battery cell, a battery, and an electric device. The battery cell comprises: a casing, the casing comprising a first wall portion; a pressure relief mechanism, the pressure relief mechanism being arranged on the first wall portion; and an electrode assembly, being accommodated in the casing, the electrode assembly comprising at least one negative electrode sheet, the first wall portion facing the edge of the negative electrode sheet, an active material layer being formed on at least one side of the negative electrode sheet, the active material layer comprising a first region and a second region which are arranged in a first direction, the second region being closer to the first wall portion than the first region, the first direction being parallel to the thickness direction of the first wall portion, and in a full-charge state, the thickness of the second region being a μm, and the thickness of the first region being b μm, wherein b−a≥5 μm.

FIG. 3

**Description**

TECHNICAL FIELD

The present application relates to the technical field of batteries, and in particular, to a battery cell, a battery, and an electric device.

BACKGROUND

Energy conservation and emission reduction are the key to sustainable development of the automobile industry. Electric vehicles have become an important part of the sustainable development of the automobile industry due to their advantages in energy conservation and environmental protection. For electric vehicles, the battery technology is an important factor in their development.

In order to ensure the service life of the battery cell, a pressure relief mechanism is generally arranged on the battery cell. The pressure relief mechanism is configured to relieve the pressure inside the battery cell when the battery cell satisfies a predetermined condition. During use of the battery cell in charging and discharging, the negative electrode plate may expand, causing the housing to expand and deform. The housing tends to exert a tensile force on the pressure relief mechanism after deformation, which makes the pressure relief mechanism cracked and damaged, reducing the reliability of the battery cell.

SUMMARY

In view of the technical problems in the background section, the present application provides a battery cell, which can reduce the tension on a pressure relief mechanism caused by an area of a housing proximal to a first wall part and reduce the probability of cracking of the pressure relief mechanism.

A first aspect of the present application provides a battery cell. The battery cell includes: a housing, where the housing includes a first wall part; a pressure relief mechanism, where the pressure relief mechanism is arranged on the first wall part; and an electrode assembly accommodated in the housing, where the electrode assembly includes at least one negative electrode plate. The first wall part is arranged facing an edge of the negative electrode plate, an active material layer is formed on at least one side of the negative electrode plate, the active material layer includes a first area and a second area arranged in a first direction, the second area is closer to the first wall part than the first area, the first direction is parallel to the thickness direction of the first wall part, and in a fully charged state, the thickness of the second area is a $\mu$m, the thickness of the first area is b $\mu$m, and the following condition is satisfied: b - a $\geq$ 5 $\mu$m.

In the battery cell proposed in the present application, by allowing the difference in thickness between the first area and the second area after full charge to be within the above range, the expansion force received by the part of the housing proximal to the pressure relief mechanism can be reduced, and the tension on the pressure relief mechanism caused by the housing can be reduced, thereby reducing the probability of tension-induced rupture at the pressure relief mechanism, reducing the probability of liquid leakage at the pressure relief mechanism, and improving the reliability of the battery cell.

According to some embodiments of the present application, 10 $\mu$m $\leq$ b - a $\leq$ 33 $\mu$m. Thus, the expansion force received by the housing is mainly concentrated in the area distal to the pressure relief mechanism, so that the expansion force received by the part of the housing proximal to the pressure relief mechanism is reduced, and the tension on the pressure relief mechanism caused by the housing is reduced, thereby reducing the probability of tension-induced rupture at the pressure relief mechanism, and improving the reliability of the battery cell. In addition, excessive stress generated at the boundary between the first area and the second area is reduced, and the risk of active ion precipitation is reduced.

According to some embodiments of the present application, 210 $\mu$m $\leq$ a $\leq$ 275 $\mu$m, and 195 $\mu$m $\leq$ b $\leq$ 245 $\mu$m. Thus, the expansion force received by the part of the housing proximal to the pressure relief mechanism is reduced, and the tension on the pressure relief mechanism caused by the housing is reduced, thereby reducing the probability of tension-induced rupture at the pressure relief mechanism, reducing the probability of liquid leakage at the pressure relief mechanism, and improving the reliability of the battery cell.

According to some embodiments of the present application, the first area includes a first active material, and the second area includes a second active material. The mass per unit area of the first active material in the first area is $w_1$ g/m$^2$, the volume expansion rate of the first active material is $v_1$, the mass per unit area of the second active material in the second area is $w_2$ g/m$^2$, and the volume expansion rate of the second active material is $v_2$, where $v_1 > v_2$ under the condition that $w_1 = w_2$. Thus, the expansion degree of the second area is reduced, the deformation degree of the housing caused by the expansion of the active material layer proximal to the first wall part is reduced, the tension on the pressure relief mechanism caused by the housing proximal to the pressure relief mechanism is reduced, and the probability of cracking of the pressure relief mechanism is reduced.

According to some embodiments of the present application, both the first active material and the second active material include a silicon-based material, and the mass proportion of the silicon-based material in the first active material is greater than the mass proportion of the silicon-based material in the second active material.

According to some embodiments of the present application, the mass proportion of the silicon-based material in the first active material is less than or equal to 30%, and the mass proportion of the silicon-based material in the second active material is less than or equal to 15%.

According to some embodiments of the present application, both the first active material and the second active material include graphite, and the volume expansion rate of the graphite in the first active material is greater than the volume expansion rate of the graphite in the second active material.

Thus, by allowing the thickness of the first area after full charge to be greater than the thickness of the second area after full charge through the above method, the expansion force received by the part of the housing proximal to the pressure relief mechanism is reduced, and the tension on the pressure relief mechanism caused by the housing is reduced, thereby reducing the probability of tension-induced rupture at the pressure relief mechanism.

According to some embodiments of the present application, the type of the active material in the first area is the same as that in the second area. The mass per unit area of the first active material in the first area is $w_1$ g/m$^2$, the mass per unit area of the second active material in the second area is $w_2$ g/m$^2$, and $w_1 > w_2$. Thus, by allowing the thickness of the first area after full charge to be greater than the thickness of the second area after full charge, the expansion force received by the part of the housing proximal to the pressure relief mechanism is reduced, and the tension on the pressure relief mechanism caused by the housing is reduced, thereby reducing the probability of tension-induced rupture at the pressure relief mechanism, and reducing the probability of cracking of the pressure relief mechanism.

According to some embodiments of the present application, the values of $w_1$ and $w_2$ satisfy at least one of the following conditions: $140$ g/m$^2 \leq w_1 \leq 200$ g/m$^2$; $112$ g/m$^2 \leq w_2 \leq 180$ g/m$^2$. Thus, by allowing the values of $w_1$ and $w_2$ to be within the above ranges, the thickness of the first area after full charge is greater than the thickness of the second area after full charge, thereby reducing the pulling on the pressure relief mechanism by the housing proximal to the pressure relief mechanism, and reducing the probability of cracking of the pressure relief mechanism.

According to some embodiments of the present application, in the first direction, the height of the first area is $h_1$, the height of the second area is $h_2$, and $5 \leq h_1/h_2 \leq 30$. Thus, the probability of cracking of the pressure relief mechanism is reduced, and at the same time, the energy density of the battery is improved.

According to some embodiments of the present application, $60$ mm $\leq h_1 \leq 120$ mm, optionally $80$ mm $\leq h_1 \leq 100$ mm.

According to some embodiments of the present application, $2$ mm $\leq h_2 \leq 15$ mm, optionally $5$ mm $\leq h_2 \leq 10$ mm.

Thus, by allowing $h_1$ and $h_2$ to be within the above range, the deformation degree of the housing caused by the expansion of the active material layer proximal to the first wall part is reduced, and the tension on the pressure relief mechanism caused by the housing proximal to the pressure relief mechanism is reduced, so that the probability of cracking of the pressure relief mechanism is reduced, and at the same time, the energy density of the battery is improved.

According to some embodiments of the present application, the battery cell further includes a positive electrode plate. The polarity of the positive electrode plate is opposite to that of the negative electrode plate, the positive electrode plate and the negative electrode plate are arranged in a stacked manner in a second direction, and the second direction intersects with the first direction.

According to some embodiments of the present application, the battery cell further includes a positive electrode plate. The polarity of the positive electrode plate is opposite to that of the negative electrode plate, and the positive electrode plate and the negative electrode plate are arranged in a winding manner.

According to some embodiments of the present application, the pressure relief mechanism is integrally formed with the first wall part. Thus, the reliability of the pressure relief mechanism is higher, the process of connecting the pressure relief mechanism to the first wall part is omitted, and the production cost of the battery cell can be reduced.

According to some embodiments of the present application, the first wall part includes a weakened zone and a non-weakened zone, the weakened zone is arranged along the edge of the pressure relief mechanism and connects the pressure relief mechanism and the non-weakened zone, and the weakened zone is configured to crack when the pressure of the battery cell is relieved. Thus, when the pressure of the battery cell is relieved, the first wall part may crack at the weakened zone, and the pressure relief mechanism may be opened by taking the weakened zone as a boundary. This provides a relatively large pressure relief area, allowing the discharge medium inside the housing to be discharged quickly.

According to some embodiments of the present application, the first wall part is provided with a score groove, and the weakened zone is formed in the first wall part at the area where the score groove is provided. Thus, the weakened zone is formed by providing a score groove on the first wall part, thereby forming an integrated pressure relief mechanism. The pressure relief mechanism features a simple forming method and low production cost.

According to some embodiments of the present application, the score groove is a groove extending along a closed trajectory. Thus, in the pressure relief process, after the first wall part cracks along the score groove, the pressure relief mechanism can be opened in a manner of separating from the non-weakened zone. This increases the pressure relief area and enhances the pressure relief rate of the battery cell.

According to some embodiments of the present application, the pressure relief mechanism is arranged separately from the first wall part, the first wall part is provided with a through hole, and the pressure relief mechanism is mounted in the through hole. Thus, the pressure relief mechanism is a component independent of the housing, and the pressure relief mechanism and the housing can be produced separately and then assembled. This features low production difficulty and high efficiency.

According to some embodiments of the present application, the housing includes a housing body and an end cover. At least one side of the housing body is provided with an opening, the end cover is connected to the housing body and is configured to close the opening, and the first wall part is formed in the housing body. Thus, by arranging the pressure relief mechanism on the housing body, the structure of the end cover can be simplified, and at the same time, this enables to shorten the distance between the pressure relief mechanism and the electrode assembly, thereby shortening the path for the discharge medium to flow to the pressure relief mechanism during pressure relief, shortening the time for the discharge medium to reach the pressure relief mechanism, improving the timeliness of pressure relief of the battery cell, and thereby effectively improving the reliability of the battery cell.

According to some embodiments of the present application, two opposite sides of the housing body are each provided with an opening, and two end covers are configured to close the openings on corresponding sides. Thus, by providing two openings on the housing body, the manufacturing and molding of the housing body can be facilitated, and it is also convenient for the electrode assembly to lead out the tabs from both ends, thereby facilitating the separation of the two electrical connection parts and reducing the risk of short circuits of the battery cell.

According to some embodiments of the present application, the end cover is provided with an electrical connection part, and the electrical connection part is electrically connected to the positive electrode plate, or the electrical connection part is electrically connected to the negative electrode plate. Thus, the electric energy of the battery cell is input or output.

According to some embodiments of the present application, the first wall part is configured to support the electrode assembly and is located below the electrode assembly. Thus, the pressure relief mechanism may be arranged at the bottom of the battery cell. The bottom of the battery cell may be provided with an exhaust channel, and the exhaust channel may be in communication with the pressure relief mechanism, so as to discharge the high-temperature and high-pressure smoke into the exhaust channel through the pressure relief mechanism at the bottom when the battery cell is subjected to thermal runaway, thereby discharging the smoke to the outside.

According to some embodiments of the present application, the housing further includes a second wall part, a third wall part, and a fourth wall part. The fourth wall part and the first wall part are arranged opposite to each other in the first direction, the second wall part and the third wall part are arranged opposite to each other in the second direction, and the first wall part, the second wall part, the fourth wall part, and the third wall part are connected end to end in sequence. Thus, the housing body including the first wall part, the second wall part, the third wall part, and the fourth wall part is approximately in the shape of a quadrangular prism, and it has a simple structure and is easy to form.

According to some embodiments of the present application, in the first direction, the minimum distance between the first wall part and the fourth wall part is $L_1$; the minimum distance between the second wall part and the third wall part is $L_2$, and the following condition is satisfied: $L_1 > L_2$. Thus, when the electrode assembly expands, the influence of the electrode assembly on the first wall part and the fourth wall part is less than the influence of the electrode assembly on the second wall part and the third wall part. Since the pressure relief mechanism is located in the first wall part, the risk of shielding or damaging the pressure relief mechanism due to the expansion of the electrode assembly can be reduced.

According to some embodiments of the present application, the material of the housing includes at least one of aluminum, nickel-plated carbon steel, stainless steel, a magnesium alloy, a nickel alloy, a copper alloy, and a zirconium alloy. Thus, by using the materials described above, the tensile strength of the housing body can be increased, thereby reducing the deformation of the housing body when the electrode assembly expands, reducing the probability of tension-induced rupture at the housing body or the pressure relief mechanism, reducing the risk of liquid leakage, and improving the reliability of the battery cell.

According to some embodiments of the present application, the positive electrode plate includes a positive electrode current collector and a positive electrode active substance zone arranged on the surface of the positive electrode current collector. The constituent material of the positive electrode current collector includes an aluminum element with a mass percentage greater than or equal to 50%. Thus, compared with using a composite current collector in the related art, the use of the positive electrode current collector described above can reduce the difficulty in manufacturing the positive electrode plate and reduce the manufacturing cost as well.

A second aspect of the present application provides a battery. The battery includes the battery cell provided in the first aspect of the present application.

A third aspect of the present application provides an electric device. The electric device includes the battery provided in the second aspect of the present application.

The additional aspects and the advantages of the present application will be partially provided in the following description, will partially become apparent from the following description, or will be learned through the practice of the present application.

BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:

FIG. 1 is a schematic diagram of a battery cell according to some embodiments of the present application;

FIG. 2 is an exploded view of a battery cell according to some embodiments of the present application;

FIG. 3 is a sectional view of a battery cell according to some embodiments of the present application;

FIG. 4 is a schematic diagram of an electrode assembly according to some embodiments of the present application;

FIG. 5 is a schematic diagram of an electrode assembly according to some other embodiments of the present application;

FIG. 6 is a schematic diagram of a first wall part according to some embodiments of the present application;

FIG. 7 is a cross-sectional view taken along line A-A of FIG. 6 according to some embodiments;

FIG. 8 is a schematic diagram of a pressure relief mechanism according to some embodiments of the present application;

FIG. 9 is a schematic diagram of a pressure relief mechanism according to some other embodiments of the present application;

FIG. 10 is a schematic diagram of a pressure relief mechanism according to some other embodiments of the present application;

FIG. 11 is a schematic diagram of a battery cell according to still some other embodiments of the present application;

FIG. 12 is a schematic diagram of a fifth wall part of a battery cell according to some embodiments of the present application;

FIG. 13 is a schematic diagram of a battery in the related art; and

FIG. 14 is a schematic diagram of an electric device in the related art.

Description of the reference numerals:

battery 1000, vehicle 2000, case 200, first portion 210, second portion 220,

battery cell 100,

housing 10, housing body 101, end cover 102, first wall part 11, weakened zone 111, non-weakened zone 112, second wall part 12, third wall part 13, fourth wall part 14, fifth wall part 15, sixth wall part 16,

electrode assembly 20, positive electrode plate 21, negative electrode plate 22, first area 221, second area 222,

electrical connection part 30,

pressure relief mechanism 40, predetermined pressure relief zone 401, score groove 41, first circular arc segment 411, first straight line segment 412, second straight line segment 413, third straight line segment 414, arc-shaped segment 415, fourth straight line segment 416, fifth straight line segment 417, sixth straight line segment 418, seventh straight line segment 419 (hinge score 419),

patch 60,

first direction F1, second direction F2, third direction F3.

## DETAILED DESCRIPTION

Embodiments of the technical solutions of the present application are described in detail below. The following embodiments are only used to more clearly illustrate the technical solutions of the present application, and therefore, are only exemplary and do not limit the protection scope of the present application.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Battery technology advancement requires consideration of various design factors at the same time, such as energy density, cycle life, discharge capacity, charging and discharging rate, and other performance parameters. In the battery cell, in order to ensure the service life of the battery cell, a pressure relief mechanism may be arranged on the housing of the battery cell. When the battery cell is subjected to thermal runaway, the pressure inside the battery cell is relieved through the pressure relief mechanism, so as to improve the reliability of the battery cell.

During use of the battery cell in charging and discharging, the electrode assembly will expand, causing the housing to swell and deform. The pressure relief mechanism is arranged on the housing, especially some pressure relief mechanisms are arranged on the wall part at a side relatively close to the electrode assembly. The expansion of the electrode assembly will deform the wall part where the pressure relief mechanism is located, thereby exerting a tensile force on the score of the pressure relief mechanism, causing the pressure relief mechanism to be damaged at the score, and thereby resulting in liquid leakage and the like. This will lead to the damage of the pressure relief mechanism when the pressure inside the battery cell does not reach the burst pressure of the pressure relief mechanism, resulting in the failure of the pressure relief mechanism and a relatively low reliability of the pressure relief mechanism.

The present application proposes a battery cell. A negative electrode plate includes a first area and a second area. The second area is closer to a first wall part where a pressure relief mechanism is located than the first area. By allowing the difference in thickness between the first area and the second area after full charge to be within the above range, the deformation degree of the housing proximal to the first wall part is reduced, thereby reducing the tension on the pressure relief mechanism caused by the housing, reducing the probability of cracking of the pressure relief mechanism, reducing the probability of liquid leakage at the pressure relief mechanism, and improving the reliability of the battery cell.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

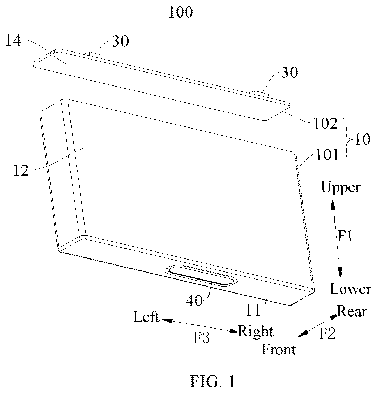

A first aspect of the present application provides a battery cell 100. Referring to FIG. 1, the battery cell 100 includes: a housing 10, where the housing 10 includes a first wall part 11; a pressure relief mechanism 40, where the pressure relief mechanism 40 is arranged on the first wall part 11; and an electrode assembly 20 accommodated in the housing 10, where the electrode assembly 20 includes at least one negative electrode plate 22. The first wall part 11 is arranged facing an edge of the negative electrode plate 22, an active material layer is formed on at least one side of the negative electrode plate 22, the active material layer includes a first area 221 and a second area 222 arranged in a first direction F1, the second area 222 is closer to the first wall part 11 than the first area 221, the first direction F1 is parallel to the thickness direction of the first wall part 11, and in a fully charged state, the thickness of the second area 222 is a $\mu$m, the thickness of the first area 221 is b $\mu$m, and the following condition is satisfied: b - a $\geq$ 5 $\mu$m.

In the battery cell 100 proposed in the present application, by allowing the difference in thickness between the first area 221 and the second area 222 after full charge to be within the above range, the expansion force received by the part of the housing 10 proximal to the pressure relief mechanism 40 can be reduced, and the tension on the pressure relief mechanism 40 caused by the housing 10 can be reduced, thereby reducing the probability of tension-induced rupture at the pressure relief mechanism 40, reducing the probability of liquid leakage at the pressure relief mechanism 40, and improving the reliability of the battery cell 100.

In the present application, the thickness of the first area 221 and the thickness of the second area 222 may be measured by using a ten-thousandth micrometer or a micrometer.

According to some embodiments of the present application, 10 $\mu$m $\leq$ b - a $\leq$ 33 $\mu$m. For example, it may be 10 $\mu$m, 15 $\mu$m, 20 $\mu$m, 25 $\mu$m, 30 $\mu$m, 33 $\mu$m, or the like, or may be in a range formed by any of the foregoing values. Thus, by allowing the difference in thickness between the first area 221 and the second area 222 after full charge to be within the above range, the expansion force received by the housing 10 can be mainly concentrated in the area distal to the first wall part 11, so that the expansion force received by the housing 10 proximal to first wall part 11 is reduced, and the tension on the pressure relief mechanism 40 caused by the housing 10 proximal to the first wall part 11 is reduced, thereby reducing the probability of cracking of the pressure relief mechanism 40, and improving the reliability of the battery cell 100. By allowing b - a $\leq$ 33 $\mu$m, stress at the boundary between the first area 221 and the second area 222 is reduced, and the probability of active ion precipitation is reduced.

According to some embodiments of the present application, 210 $\mu$m $\leq$ a $\leq$ 275 $\mu$m, and 195 $\mu$m $\leq$ b $\leq$ 245 $\mu$m. For example, a may be 210 $\mu$m, 220 $\mu$m, 230 $\mu$m, 240 $\mu$m, 250 $\mu$m, 260 $\mu$m, 275 $\mu$m, or the like, or may be in a range formed by any of the foregoing values; b may be 195 $\mu$m, 205 $\mu$m, 215 $\mu$m, 225 $\mu$m, 235 $\mu$m, 245 $\mu$m, or the like, or may be in a range formed by any of the foregoing values. Thus, the expansion force received by the part of the housing 10 proximal to the pressure relief mechanism 40 is reduced, the tension on the pressure relief mechanism 40 caused by the housing 10 is reduced, and the probability of tension-induced rupture at the pressure relief mechanism 40 is reduced.

According to some embodiments of the present application, the first area 221 includes a first active material, and the second area 222 includes a second active material. The mass per unit area of the first active material in the first area 221 is $w_1$ g/m$^2$, the volume expansion rate of the first active material is $v_1$, the mass per unit area of the second active material in the second area 222 is $w_2$ g/m$^2$, and the volume expansion rate of the second active material is $v_2$, where $v_1 > v_2$ under the condition that $w_1 = w_2$. Thus, by allowing the thickness change rate of the second area 222 to be smaller than the thickness change rate of the first area 221, the deformation degree of the housing caused by the expansion of the active material layer proximal to the first wall part is reduced, the tension on the pressure relief mechanism caused by the housing proximal to the pressure relief mechanism is reduced, and the probability of cracking of the pressure relief mechanism is reduced.

Specifically, under the condition that $w_1 = w_2$, $v_1 > v_2$ can be achieved in the following manner: According to some embodiments of the present application, both the first active material and the second active material include a silicon-based material, and the mass proportion of the silicon-based material in the first active material is greater than the mass proportion of the silicon-based material in the second active material.

As an example, both the first active material and the second active material include graphite, and the mass proportion of the silicon-based material in the first active material is greater than the mass proportion of the silicon-based material in the second active material.

As an example, both the first active material and the second active material include graphite, and only the first active material includes a silicon-based material.

Thus, the expansion degree of the first area 221 is greater than that of the second area 222 after charging, which reduces the deformation degree of the housing 10 caused by the expansion of the active material layer proximal to the first wall part 11 and reduces the tension on the pressure relief mechanism 40 caused by the housing 10 proximal to the pressure relief mechanism, thereby reducing the probability of cracking of the pressure relief mechanism 40, and improving the reliability of the battery cell 100.

In the present application, after the active material layer on the negative electrode plate is scraped off, the mass proportion of the active material in the active material layer may be determined by inductively coupled plasma (ICP).

As an example, the silicon-based material may include at least one of silicon oxide or silicon carbide.

According to some embodiments of the present application, the mass proportion of the silicon-based material in the first active material is less than or equal to 30%, and the mass proportion of the silicon-based material in the second active material is less than or equal to 15%. For example, the mass proportion of the silicon-based material in the first active material may be 5%, 10%, 15%, 20%, 25%, 30%, or the like, or may be in a range formed by any of the foregoing values. The mass proportion of the silicon-based material in the second active material may be 3%, 6%, 9%, 12%, 15%, or the like, or may be in a range formed by any of the foregoing values. Thus, by allowing the content of the silicon-based material in the first area 221 and the second area 222 to be different, the thicknesses of the first area 221 and the second area 222 after full charge are made different, so that the expansion force received by the part of the housing proximal to the pressure relief mechanism is reduced, and the tension on the pressure relief mechanism caused by the housing is reduced, thereby reducing the probability of tension-induced rupture at the pressure relief mechanism, reducing the probability of liquid leakage at the pressure relief mechanism, and improving the reliability of the battery cell.

According to some embodiments of the present application, both the first active material and the second active material include graphite, and the volume expansion rate of the graphite in the first active material is greater than the volume expansion rate of the graphite in the second active material. As an example, the first active material includes natural graphite, and in the second active material, the surface of the natural graphite may be coated with carbon nanotubes to reduce the volume expansion rate of the graphite in the second active material. Thus, by allowing the content of the silicon-based material in the first area 221 and the second area 222 to be different, the thicknesses of the first area 221 and the second area 222 after full charge are made different, so that the expansion force received by the part of the housing proximal to the pressure relief mechanism is reduced, and the tension on the pressure relief mechanism caused by the housing is reduced, thereby reducing the probability of tension-induced rupture at the pressure relief mechanism, reducing the probability of liquid leakage at the pressure relief mechanism, and improving the reliability of the battery cell.

In the present application, a test method for the volume expansion rate of the active material may be confocal microscopy.

According to some embodiments of the present application, the type of the active material in the first area 221 is the same as that in the second area 222. The mass per unit area of the first active material in the first area 221 is $w_1$ g/m$^2$, the mass per unit area of the second active material in the second area 222 is $w_2$ g/m$^2$, and $w_1 > w_2$. Thus, by allowing the thickness of the first area 221 after full charge to be greater than the thickness of the second area after full charge, the expansion force received by the part of the housing proximal to the pressure relief mechanism is reduced, and the tension on the pressure relief mechanism caused by the housing is reduced, thereby reducing the probability of tension-induced rupture at the pressure relief mechanism, and reducing the probability of cracking of the pressure relief mechanism.

According to some embodiments of the present application, $140\,\text{g/m}^2 \leq w_1 \leq 200\,\text{g/m}^2$. For example, it may be 140 g/m$^2$, 150 g/m$^2$, 160 g/m$^2$, 180 g/m$^2$, 190 g/m$^2$, 200 g/m$^2$, or the like, or may be in a range formed by any of the foregoing values.

According to some embodiments of the present application, $112\,\text{g/m}^2 \leq w_2 \leq 180\,\text{g/m}^2$. For example, it may be 112 g/m$^2$, 120 g/m$^2$, 140 g/m$^2$, 160 g/m$^2$, 180 g/m$^2$, or the like, or may be in a range formed by any of the foregoing values.

Thus, by allowing the values of $w_1$ and $w_2$ to be within the above ranges, the thickness of the first area 221 after full charge is greater than the thickness of the second area 222 after full charge, thereby reducing the tension on the pressure relief mechanism caused by the housing proximal to the pressure relief mechanism, and reducing the probability of cracking of the pressure relief mechanism.

According to some embodiments of the present application, the height of the first area 221 is $h_1$, the height of the second area 222 is $h_2$, and $5 \leq h_1/h_2 \leq 30$. For example, it may be 5, 10, 15, 20, 25, 30, or the like, or may be in a range formed by any of the foregoing values. Thus, the energy density of the battery is improved, and at the same time, the expansion force received by the housing 10 is mainly concentrated in the area distal to the first wall part 11, so that the expansion force received by the housing 10 proximal to the first wall part 11 is reduced, and the tension on the pressure relief mechanism 40 caused by the housing 10 proximal to the first wall part 11 is reduced, thereby reducing the probability of cracking of the pressure relief mechanism 40, and improving the reliability of the battery cell 100.

According to some embodiments of the present application, $60\,mm \leq h_1 \leq 120\,mm$. For example, it may be 60 mm, 70 mm, 80 mm, 90 mm, 100 mm, 110 mm, 120 mm, or the like, or may be in a range formed by any of the foregoing values. According to some specific embodiments of the present application, $80\,mm \leq h_1 \leq 100\,mm$.

According to some embodiments of the present application, $2\,mm \leq h_2 \leq 15\,mm$. For example, it may be 2 mm, 5 mm, 7 mm, 9 mm, 11 mm, 13 mm, 15 mm, or the like, or may be in a range formed by any of the foregoing values. According to some specific embodiments of the present application, $5\,mm \leq h_2 \leq 10\,mm$.

Thus, by allowing the values of $h_1$ and $h_2$ to be within the above ranges, the energy density of the battery is improved, and at the same time, the expansion force received by the housing 10 is mainly concentrated in the area distal to the first wall part 11, so that the expansion force received by the housing 10 proximal to the first wall part 11 is reduced, and the tension on the pressure relief mechanism 40 caused by the housing 10 proximal to the first wall part 11 is reduced, thereby reducing the probability of cracking of the pressure relief mechanism 40, and improving the reliability of the battery cell 100.

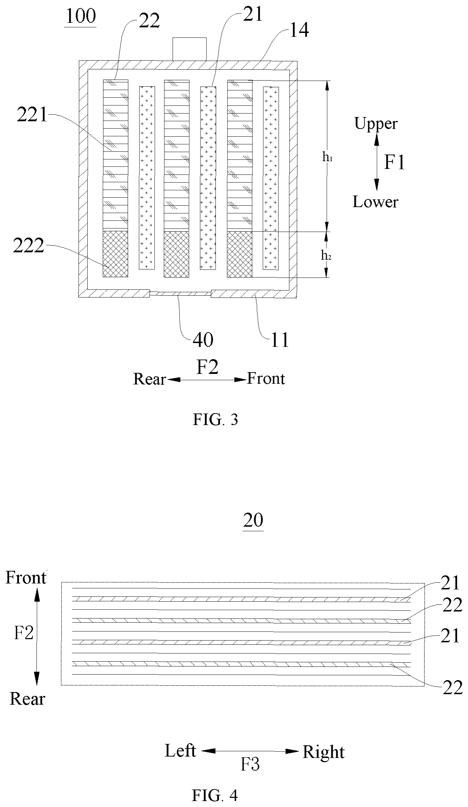

According to some embodiments of the present application, referring to FIG. 4, the battery cell 100 further includes a positive electrode plate 21. The polarity of the positive electrode plate 21 is opposite to that of the negative electrode plate 22. The positive electrode plate 21 and the negative electrode plate 22 are arranged in a stacked manner.

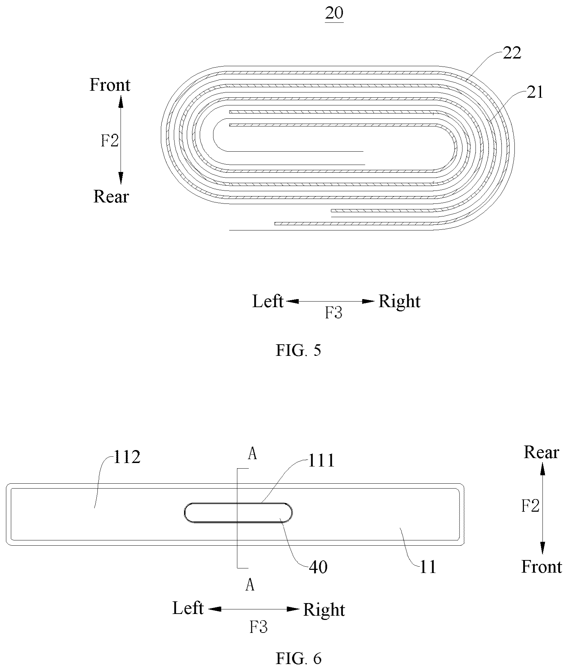

According to some embodiments of the present application, referring to FIG. 5, the battery cell 100 further includes a positive electrode plate 21. The polarity of the positive electrode plate 21 is opposite to that of the negative electrode plate 22. The positive electrode plate 21 and the negative electrode plate 22 are arranged in a winding manner.

According to some embodiments of the present application, referring to FIG. 6, the pressure relief mechanism 40 is integrally formed with the first wall part 11. By allowing the pressure relief mechanism 40 to be integrally formed with the first wall part 11, the reliability of the pressure relief mechanism 40 can be improved, the process of connecting the pressure relief mechanism 40 to the first wall part 11 is omitted, and the production and manufacturing cost of the battery cell 100 can be reduced.

In some embodiments, referring to FIG. 6, the first wall part 11 includes a weakened zone 111 and a non-weakened zone 112. The weakened zone 111 is arranged along the edge of the pressure relief mechanism 40 and connects the pressure relief mechanism 40 and the non-weakened zone 112, and the weakened zone 111 is configured to crack when the pressure of the battery cell 100 is relieved. Specifically, the weakened zone 111, the non-weakened zone 112, and the pressure relief mechanism 40 are integrally formed. The non-weakened zone 112 is the main body area of the first wall part 11, the weakened zone 111 is an area of the first wall part 11 that is weaker than the non-weakened zone 112, and the strength of the non-weakened zone 112 is greater than the strength of the weakened zone 111. The weakened zone 111 may be a weakened portion of the first wall part 11. For example, the annealing treatment is performed on part of the first wall part 11 to reduce the strength of this area, thereby forming the weakened zone 111. For another example, a groove is provided on the first wall part 11 to form the weakened zone 111 at the area where the groove is located. When the pressure of the battery cell 100 is relieved, the first wall part 11 may crack at the weakened zone 111, and the pressure relief mechanism 40 may be opened by taking the weakened zone 111 as a boundary. This provides a relatively large pressure relief area, allowing the discharge medium inside the housing 10 to be discharged quickly.

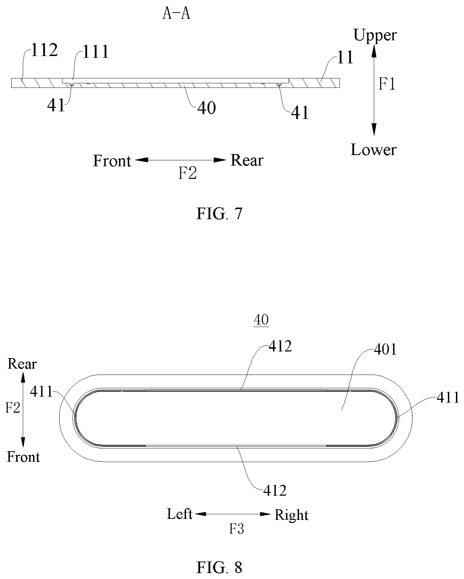

According to some embodiments of the present application, referring to FIG. 7, the first wall part 11 is provided with a score groove 41, and the weakened zone 111 is formed in the first wall part 11 at the area where the score groove 41 is provided. The score groove 41 may be formed in various ways, such as stamping, milling, and laser etching. The score groove 41 extends in the same direction as the weakened zone 111. The score groove 41 may extend along a closed trajectory; the score groove 41 may also extend along a non-closed trajectory. For example, the score groove 41 is a groove extending along a circular arc-shaped trajectory, a U-shaped trajectory, etc. The score groove 41 may be arranged on the inner surface and/or outer surface of the first wall part 11. As an example, in the embodiment illustrated in FIG. 5, the score groove 41 is arranged on the outer surface of the first wall part 11.

The bottom wall of the score groove 41 is the weakened zone 111, and the thickness of the weakened zone 111 is less than the thickness of the non-weakened zone 1112.

According to some embodiments of the present application, referring to FIG. 7, the weakened zone 111 is formed by providing a score groove 41 on the first wall part 11, thereby forming an integrated pressure relief mechanism 40. The pressure relief mechanism 40 features a simple forming method and low production cost.

According to some embodiments of the present application, the score groove 41 is a groove extending along a closed trajectory.

As can be appreciated, the weakened zone 111 extends along a closed trajectory, and the weakened zone 111 defines the pressure relief mechanism 40.

According to some embodiments of the present application, the score groove 41 may be an annular groove, which may be a rectangular annular groove or a circular annular groove. The rectangular annular groove is a groove extending along a rectangular trajectory, and the circular annular groove is a groove extending along a circular trajectory.

In some other embodiments, the score groove 41 may also be of other shapes, and the score groove 41 is a groove extending along the trajectory of a "double-Y" shape, an "I" shape, a "王" shape (the shape of Chinese character 王), etc. In this case, the groove bottom of the score groove 41 forms the pressure relief mechanism 40, such that the pressure relief mechanism 40 is in the form of the above-mentioned corresponding shape, the pressure relief mechanism 40 forms a weakened zone relative to the first wall part 11, and the score groove 41 here may also be understood as the score groove 41. In this case, when the pressure of the battery cell 100 is relieved, the groove bottom of the score groove 41 cracks, the pressure relief mechanism 40 is damaged, and the first wall part 11 may form an opening at the groove bottom of the score groove 41 to achieve pressure relief.

In the pressure relief process, after the first wall part 11 cracks along the score groove 41, the pressure relief mechanism 40 can be opened in a manner of separating from the non-weakened zone 1112. This increases the pressure relief area and enhances the pressure relief rate of the battery cell 10.

In some embodiments, referring to FIG. 8, the score groove 41 includes two first circular arc segments 411 arranged opposite to each other and two first straight line segments 412 arranged in parallel with each other, two ends of each first straight line segment 412 are respectively connected to the two first circular arc segments 411, and the two first straight line segments 412 and the two first circular arc segments 411 form a closed ring-shaped structure. In the second direction F2, the outer edge of the orthographic projection of the ring-shaped structure constitutes the predetermined opening boundary of the predetermined pressure relief zone 401, that is, the predetermined opening boundary is defined by the outer edge of the orthographic projection of the score groove 40 in the second direction F2.

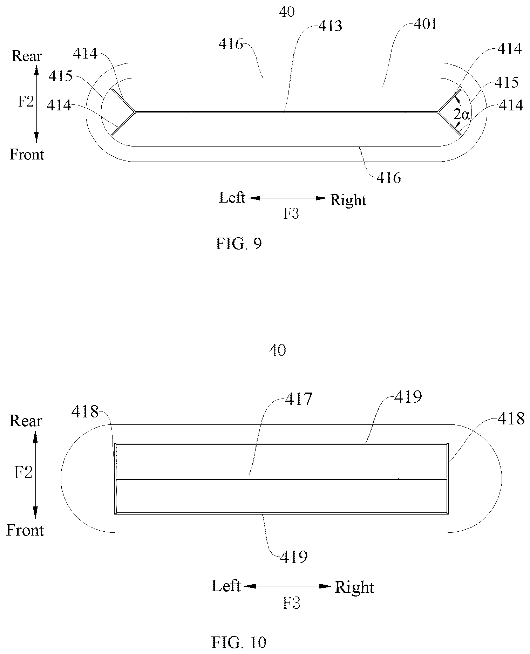

In some embodiments, referring to FIG. 9, the score groove 41 includes a second straight line segment 413 and four third straight line segments 414, and two ends of the second straight line segment 413 are each connected to two third straight line segments 414 arranged at a preset included angle. In the second direction F2, between free ends of orthographic projections of two third straight line segments 414 located at the same end of the second straight line segment 413, an arc-shaped segment 415 is defined with the vertex of the preset included angle as the circle center, and between free ends of orthographic projections of two third straight line segments 414 located at the same side of the second straight line segment 413, a fourth straight line segment 416 is defined. The two arc-shaped segments 415 and the two fourth straight line segments 416 together constitute the predetermined opening boundary of the predetermined pressure relief zone 401, that is, the predetermined opening boundary is defined by connecting lines between multiple end parts of the score groove 40.

In some embodiments, referring to FIG. 10, the score groove 41 includes a fifth straight line segment 417 and two sixth straight line segments 418. The fifth straight line segment 417 is located between the two sixth straight line segments 418, and end parts of the fifth straight line segment 417 are respectively connected to the middle portions of the corresponding sixth straight line segments 418. Between end parts of the two sixth straight line segments 418 located on the same side of the fifth straight line segment 417, a seventh straight line segment 419 is defined. The outer edges of the orthographic projections of the seventh straight line segments 419 and the sixth straight line segments 418 in the second direction F2 constitute the predetermined opening boundary of the predetermined pressure relief zone 401, that is, the predetermined opening boundary is defined together by the outer edges of the orthographic projections of the connecting lines between multiple end parts of the score groove 40 and a portion of the score groove 40 in the second direction.

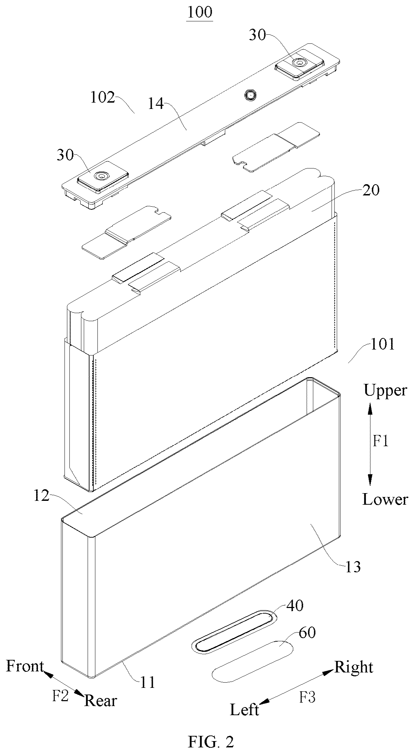

In some embodiments, referring to FIG. 2, a patch 60 may be further provided on the outside of the pressure relief mechanism 40, and the patch 60 cooperates with the housing 10 to protect the pressure relief mechanism 40.

According to some embodiments of the present application, referring to FIGs. 1 and 2, the pressure relief mechanism is arranged separately from the first wall part 11, the first wall part 11 is provided with a through hole, and the pressure relief mechanism 40 is mounted in the through hole.

As shown in FIGs. 1 and 2, the pressure relief mechanism 40 and the housing 10 are two separate components, which are formed separately and then assembled together. Specifically, the pressure relief mechanism 40 may be an anti-explosion sheet, an anti-explosion valve, a safety valve, or other components. The pressure relief mechanism 40 may be mounted on the first wall part 11 by means of bonding, welding, etc. The first wall part 11 is provided with a through hole, and the pressure relief mechanism 40 is mounted in the through hole. When the internal pressure of the battery cell 100 reaches a threshold value, the pressure relief mechanism 40 opens at least part of the through hole, and the discharge medium inside the battery cell 100 is discharged through the through hole to relieve the pressure inside the battery cell 100.

According to some embodiments of the present application, as shown in FIGs. 1 and 2, the housing 10 includes a housing body 101 and an end cover 102. At least one side of the housing body 101 is provided with an opening, the end cover 102 is connected to the housing body 101 and is configured to close the opening, and the first wall part 11 is formed in the housing body 101. As shown in FIGs. 1 and 2, the housing body 101 may be a hollow structure with an opening formed at one end, or the housing body 101 may be a hollow structure with openings formed at two opposite ends. The housing body 101 may be in various shapes, such as a prismatic shape.

The end cover 102 is a component that closes the opening of the housing body 101 to isolate the internal environment of the battery cell 100 from the external environment. The end cover 102 and the housing body 101 together define an accommodation space for accommodating the electrode assembly 20, the electrolyte, and other components. The shape of the end cover 102 may be adapted to the shape of the housing 10. For example, the housing body 101 is a rectangular parallelepiped structure, and the end cover 102 is a rectangular plate-shaped structure adapted to the housing 10. For another example, the housing body 101 is a cylindrical structure, and the end cover 102 is a circular plate-shaped structure adapted to the housing body 101. The end cover 102 may also be made of various materials, such as copper, iron, aluminum, steel, aluminum alloy, and plastic. The end cover 102 and the housing body 101 may be made of the same or different materials.

In an embodiment in which an opening is formed at one end of the housing body 101, one end cover 102 may be correspondingly provided. In an embodiment in which openings are respectively formed at two opposite ends of the housing body 101, two end covers 102 may be correspondingly provided. The two end covers 102 respectively close the two openings of the housing body 101, and the two end covers 102 and the housing body 101 together define the accommodation space.

The housing body 101 is provided with a first wall part 11 and a second wall part 12. The pressure relief mechanism 40 is arranged on the housing body 101. The pressure relief mechanism 40 may be integrally formed with the housing body 101, or may be provided separately from the housing body 101. By arranging the pressure relief mechanism 40 on the housing body 101, the structure of the end cover 102 can be simplified, and at the same time, this enables to shorten the distance between the pressure relief mechanism 40 and the main body part of the electrode assembly 20, thereby shortening the path for the discharge medium to flow to the pressure relief mechanism 40 during pressure relief, shortening the time for the discharge medium to reach the pressure relief mechanism 40, improving the timeliness of pressure relief of the battery cell 100, and thereby effectively improving the reliability of the battery cell 100.

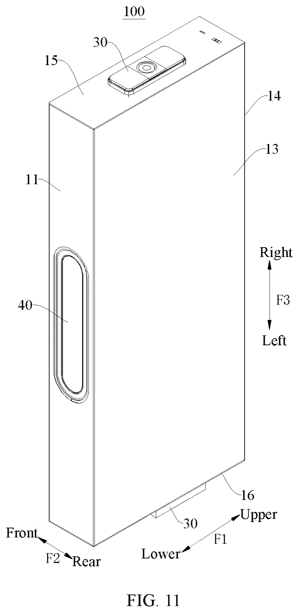

As shown in FIG. 11, in some embodiments, two opposite sides of the housing body 101 are each provided with an opening, and two end covers 102 are configured to close the openings on corresponding sides.

As shown in FIG. 11, in an embodiment in which openings are respectively formed at two opposite ends of the housing body 101, two end covers 102 may be correspondingly provided. The two end covers 102 respectively close the two openings of the housing body 101, and the two end covers 102 and the housing body 101 together define the accommodation space. The first wall part 11 is located on the housing body 101, the pressure relief mechanism 40 is located between the two openings, and each end cover 102 may be provided with one electrical connection part 30.

By providing two openings on the housing body 101, the manufacturing and molding of the housing body 101 can be facilitated, and it is also convenient for the electrode assembly 20 to lead out the tabs from both ends, thereby facilitating the separation of the two electrical connection parts 30 and reducing the risk of short circuits of the battery cell 100.

As shown in FIGs. 1 and 2, in some examples, the end cover 102 is provided with an electrical connection part 30. The electrical connection part 30 is electrically connected to the positive electrode plate 21, or the electrical connection part 30 is electrically connected to the negative electrode plate 22, such that electric energy of the battery cell can be input or output.

The electrical connection part 30 is arranged on the end cover 102. The electrical connection part 30 may be a part of the end cover 102, and the electrical connection part 30 may also be a post terminal mounted on the end cover 102. Generally, two electrical connection parts 30 are provided. One electrical connection part 30 is electrically connected to the tab of the positive electrode plate 21, and the other electrical connection part 30 is electrically connected to the tab of the negative electrode plate 22, so as to input or output electric energy of the battery cell 100. The electrical connection part 30 may be directly connected to the tab. For example, the electrical connection part 30 is directly welded to the tab. The electrical connection part 30 may also be indirectly connected to the tab. For example, the electrical connection part 30 is indirectly connected to the tab through a current collecting member. The current collecting member may be a metal conductor, such as copper, iron, aluminum, steel, or an aluminum alloy.

The electrical connection part 30 and the pressure relief mechanism 40 are located on different sides of the housing 10, that is, the electrical connection part 30 is located on one wall part of the housing 10, and the pressure relief mechanism 40 is located on another wall part of the housing 10. Since the electrical connection part 30 is connected to the tab of the electrode assembly 20, and there is a certain gap between the wall part where the electrical connection part 30 is located and the electrode assembly 20, by arranging the electrical connection part 30 and the pressure relief mechanism 40 on different wall parts of the housing 10, the distance between the pressure relief mechanism 40 and the electrode assembly 20 can be shortened. Thus, when the battery cell 100 is subjected to thermal runaway, most of the discharge medium in the housing 10 can directly flow from the edge of the electrode assembly 20 to the pressure relief mechanism 40, thereby shortening the path for the discharge medium to flow to the pressure relief mechanism 40, and enabling the discharge medium to quickly flow to the pressure relief mechanism 40. As such, the time for the discharge medium to reach the pressure relief mechanism 40 is shortened, the timeliness of pressure relief of the battery cell 100 is improved, and thereby the reliability of the battery cell 100 is effectively improved.

According to some embodiments of the present application, referring to FIGs. 1 and 2, the housing 10 further includes a second wall part 12, a third wall part 13, and a fourth wall part 14. The fourth wall part 14 and the first wall part 11 are arranged opposite to each other in the first direction F1, the second wall part 12 and the third wall part 13 are arranged opposite to each other in the second direction F2, and the first wall part 11, the second wall part 12, the fourth wall part 14, and the third wall part 13 are connected end to end in sequence.

In some embodiments, referring to FIG. 11, the housing body 101 further includes a fifth wall part 15 and a sixth wall part 16. The first wall part 11 and the fourth wall part 14 are arranged opposite to each other in the first direction (F1), the second wall part 12 and the third wall part 13 are arranged opposite to each other in the second direction (F2), and the fifth wall part 15 and the sixth wall part 16 are arranged opposite to each other in the third direction F3. Thus, the housing body 101 may be approximately in the shape of a quadrangular prism, and it has a simple structure and is easy to form.

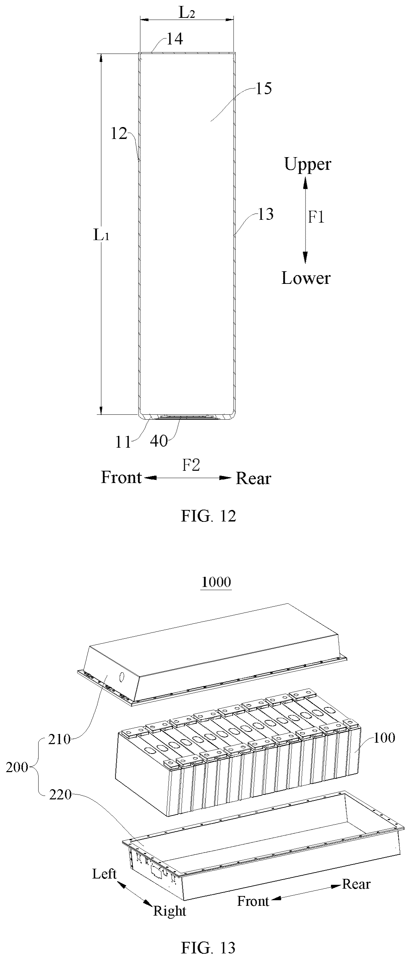

According to some embodiments of the present application, referring to FIG. 12, in the first direction F1, the distance between the first wall part 11 and the fourth wall part 14 is $L_1$; in the second direction F2, the distance between the second wall part 12 and the third wall part 13 is $L_2$, and the following condition is satisfied: $L_1 > L_2$. Thus, when the electrode plate expands, the influence of the negative electrode plate 22 on the first wall part 11 and the fourth wall part 14 is less than the influence of the negative electrode plate 22 on the second wall part 12 and the third wall part 13. Since the pressure relief mechanism 40 is located in the first wall part 11, the probability of shielding or damaging the pressure relief mechanism 40 due to the expansion of the negative electrode plate 22 can be reduced.

As shown in FIGs. 1 and 2, the first wall part 11 is configured to support the electrode assembly 20, and the first wall part 11 is located below the electrode assembly 20. Thus, the pressure relief mechanism 40 may be arranged at the bottom of the battery cell 100. The bottom of the battery cell 100 may be provided with an exhaust channel, and the exhaust channel may be in communication with the pressure relief mechanism 40, so as to discharge the high-temperature and high-pressure smoke into the exhaust channel through the pressure relief mechanism 40 at the bottom when the battery cell 100 is subjected to thermal runaway, thereby discharging the smoke to the outside.

According to some embodiments of the present application, the material of the housing 10 includes at least one of aluminum, nickel-plated carbon steel, stainless steel, a magnesium alloy, a nickel alloy, a copper alloy, and a zirconium alloy.

The material of the housing body 101 of the housing 10 may be nickel-plated carbon steel, such as SPCC; the material of the housing body 101 may also be stainless steel, such as SUS304 or SUS316; the material of the housing body 101 may also be a magnesium alloy, such as AZ31B; the material of the housing body 101 may also be a nickel alloy, such as Inconcel625; the material of the housing body 101 may also be a copper alloy, such as brass; the material of the housing body 101 may also be a zirconium alloy, such as Zr702. Certainly, the material of the housing body 101 may also be a composite material. By using the materials described above, the tensile strength of the wall parts of the housing body 101 can be increased, thereby reducing the deformation of the housing body 101 when the electrode assembly 20 expands, reducing the probability of tension-induced rupture at the housing body 101 or the pressure relief mechanism 40, reducing the risk of liquid leakage, and improving the reliability of the battery cell 100. The end cover 102 and the housing body 101 may be made of the same material, or may be made of different materials.

According to some embodiments of the present application, the positive electrode plate 21 includes a positive electrode current collector and a positive electrode active substance zone arranged on the surface of the positive electrode current collector. The constituent material of the positive electrode current collector includes an aluminum element with a mass percentage greater than or equal to 50%.

That is, the constituent material of the positive electrode current collector may include the aluminum element, and the mass percentage of the aluminum element in the positive electrode current collector is greater than or equal to 50%. Compared with using a composite current collector in the prior art, the use of the positive electrode current collector described above can reduce the difficulty in manufacturing the positive electrode plate 21 and reduce the manufacturing cost as well.

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present application.

The electrode assembly 20 includes a positive electrode, a negative electrode, and a separator. During the charging and discharging process of the battery cell 100, active ions (such as lithium ions) are intercalated and deintercalated back and forth between the positive electrode and the negative electrode. The separator is arranged between the positive electrode and the negative electrode to prevent the positive and negative electrodes from short-circuiting while allowing the passage of active ions.

[Positive Electrode Plate]

In some embodiments, the positive electrode may be a positive electrode plate. The positive electrode plate includes a positive electrode current collector and a positive electrode active material layer arranged on at least one surface of the positive electrode current collector. The positive electrode active material layer includes the positive electrode active material according to the first aspect of the present application.

As an example, the positive electrode current collector is provided with two surfaces opposite to each other in the thickness direction thereof, and the positive electrode active material layer is arranged on either or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, when the battery is a lithium-ion battery, a positive electrode active material for use in lithium-ion batteries known in the art may be used as the positive electrode active material. As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as $LiCoO_2$), a lithium nickel oxide (such as $LiNiO_2$), a lithium manganese oxide (such as $LiMnO_2$ or $LiMn_2O_4$), a lithium nickel cobalt oxide, a lithium manganese cobalt oxide, a lithium nickel manganese oxide, a lithium nickel cobalt manganese oxide (such as $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{8.1}Mn_{0.1}O_2$ (also referred to as $NCM_{811}$)), a lithium nickel cobalt aluminum oxide (such as $LiNi_{0.8}Co_{0.15}Al_{0.05}O_2$), and modified compounds thereof. Examples of the lithium-containing phosphate with an olivine structure may include, but are not limited to, at least one of lithium iron phosphate (such as $LiFePO_4$ (also referred to as LFP)), a composite material of lithium iron phosphate and carbon, lithium manganese phosphate (such as $LiMnPO_4$), a composite material of lithium manganese phosphate and carbon, lithium manganese iron phosphate, and a composite material of lithium manganese iron phosphate and carbon.

For example, when the battery is a sodium-ion battery, as an example, the positive electrode active material may include, but is not limited to, at least one of a layered transition metal oxide, a polyanionic compound, and a Prussian blue analog.

Examples of the layered transition metal oxide described above may include:

$Na_{1-x}Cu_hFe_kMn_lM^1_mO_{2-y}$, where $M^1$ is one or more of Li, Be, B, Mg, Al, K, Ca, Ti, Co, Ni, Zn, Ga, Sr, Y, Nb, Mo, In, Sn, and Ba, $0 < x \leq 0.33$, $0 < h \leq 0.24$, $0 \leq k \leq 0.32$, $0 < l \leq 0.68$, $0 \leq m < 0.1$, $h + k + l + m = 1$, and $0 \leq y < 0.2$;

$Na_{0.67}Mn_{0.7}Ni_zM^2_{0.3-z}O_2$, where $M^2$ is one or more of Li, Mg, Al, Ca, Ti, Fe, Cu, Zn, and Ba, and $0 < z \leq 0.1$;

$Na_aLi_bNi_cMn_dFe_eO_2$, where $0.67 < a \leq 1$, $0 < b < 0.2$, $0 < c < 0.3$, $0.67 < d + e < 0.8$, and $b + c + d + e = 1$.

Examples of the polyanionic compound described above may include:

$A^1_fM^3_g(PO_4)_iO_jX^1_{3-j}$, where $A^1$ is one or more of H, Li, Na, K, and $NH_4$, $M^3$ is one or more of Ti, Cr, Mn, Fe, Co, Ni, V, Cu, and Zn, $X^1$ is one or more of F, Cl, and Br, $0 < f \leq 4$, $0 < g \leq 2$, $1 \leq i \leq 3$, and $0 \leq j \leq 2$;

$Na_nM^4PO_4X^2$, where $M^4$ is one or more of Mn, Fe, Co, Ni, Cu, and Zn, $X^2$ is one or more of F, Cl, and Br, and $0 < n \leq 2$;

$Na_pM^5_q(SO_4)_3$, where $M^5$ is one or more of Mn, Fe, Co, Ni, Cu, and Zn, $0 < p \leq 2$, and $0 < q \leq 2$;

$Na_sMn_tFe_{3-t}(PO_4)_2(P_2O_7)$, where $0 < s \leq 4$, and $0 \leq t \leq 3$; for example, t is 0, 1, 1.5, 2, or 3.

Examples of the Prussian blue analog described above may include:
$A_uM^6_v[M^7(CN)_6]_w \cdot xH_2O$, where A is one or more of $H^+$, $NH_4^+$, an alkali metal cation, and an alkaline earth metal cation, $M^6$ and $M^7$ are each independently one or more of transition metal cations, $0 < u \leq 2$, $0 < v \leq 1$, $0 < w \leq 1$, and $0 < x < 6$. For example, A is one or more of $H^+$, $Li^+$, $Na^+$, $K^+$, $NH_4^+$, $Rb^+$, $Cs^+$, $Fr^+$, $Be^{2+}$, $Mg^{2+}$, $Ca^{2+}$, $Sr^{2+}$, $Ba^{2+}$, and $Ra^{2+}$, and $M^6$ and $M^7$ are each independently cations of one or more transition metal elements of Ti, V, Cr, Mn, Fe, Co, Ni, Cu, Zn, Sn, and W.

The modified compounds of the materials described above may be obtained by doping modification and/or surface-coating modification of the materials.

In some embodiments, the positive electrode active material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode active material layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

[Negative Electrode Plate]

In some embodiments, the negative electrode may be a negative electrode plate. The negative electrode plate includes a negative electrode current collector and a negative electrode active material layer arranged on at least one surface of the negative electrode current collector. The negative electrode active material layer includes a negative electrode active material.

As an example, the negative electrode current collector is provided with two surfaces opposite to each other in the thickness direction thereof, and the negative electrode active material layer is arranged on either or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode active material layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode active material layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

[Electrolyte]

The electrolyte conducts ions between the positive electrode plate and the negative electrode plate. The present application has no specific restrictions on the type of the electrolyte, which can be selected according to needs.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

[Separation Film]

In some embodiments, the battery further includes a separation film. The present application does not particularly limit the type of the separation film, and any porous-structure separation film known to have good chemical stability and mechanical stability may be selected and used.

In some embodiments, the separation film may be made of a material selected from at least one of glass fiber, non-woven fabric, polyethylene, polypropylene, and polyvinylidene difluoride. The separation film may be a single-layer film or a multi-layer composite film, and there is no particular limitation on this. When the separation film is a multi-layer composite film, the materials of the layers may be the same or different, and there is no particular limitation on this.

A second aspect of the present application provides a battery. The battery includes the battery cell 100 provided in the first aspect of the present application.

The battery mentioned in the embodiments of the present application may include one or a plurality of battery cells to provide a single physical module with higher voltage and capacity. When there are a plurality of battery cells, the plurality of battery cells are connected in series, in parallel, or in series-parallel by a busbar component.

In some embodiments, the battery may be a battery module, and when there are a plurality of battery cells, the plurality of battery cells are arranged and fixed to form one battery module.

In some embodiments, the battery may be a battery pack. The battery pack includes a case and a battery cell, and the battery cell or the battery module is accommodated in the case.

Referring to FIG. 13, FIG. 13 is an exploded view of a battery 1000 in the related art. The battery 1000 includes battery cells 100 and a case 200, and the case 200 is configured to accommodate battery cells 100.

The case 200 is a component for accommodating the battery cells 100, the case 200 provides a placement space for the battery cells 100, and the case 200 may be of various structures. In some embodiments, the case 200 may include a first portion 210 and a second portion 220. The first portion 210 and the second portion 220 are mutually lidded with each other to define a placement space for accommodating the battery cells 100. The first portion 210 and the second portion 220 may be in various shapes, such as a cylindrical shape and a rectangular parallelepiped shape. The first portion 210 may be a hollow structure with one side open, the second portion 220 may also be a hollow structure with one side open, and the open side of the first portion 210 is lidded with the open side of the second portion 220 to form a case 200 having a placement space. Alternatively, the first portion 210 is a hollow structure with one side open, the second portion 220 is of a plate-shaped structure, and the open side of the first portion 210 is lidded with the second portion 220 to form a case 200 having a placement space. As an example, the battery cell 100 may be a cylindrical battery cell, a prismatic battery cell, a pouch battery cell, or a battery cell 100 of other shapes. The prismatic battery cell includes a square-housing battery cell, a blade-shaped battery cell, and a multi-prismatic battery, and the multi-prismatic battery is, e.g., a hexagonal prismatic battery. This is not particularly limited in the present application.

In the battery 1000, one or a plurality of battery cells 100 may be provided. If a plurality of battery cells 100 are provided, the plurality of battery cells 100 may be connected in series, in parallel, or in series-parallel. The series-parallel connection means that both series connection and parallel connection are present in the connection of the plurality of battery cells 100. It may be that the plurality of battery cells 100 are first connected in series, in parallel, or in series-parallel to form battery modules, and then a plurality of battery modules are connected in series, in parallel, or in series-parallel to form a whole to be accommodated in the case 200. It may also be that all the battery cells 100 are directly connected in series, in parallel, or in series-parallel, and then the whole formed by all the battery cells 100 is accommodated in the case 200.

A third aspect of the present application provides an electric device. The electric device includes the battery provided in the second aspect of the present application. The battery 1000 is configured to provide electric energy for an electric device. Thus, using the battery 1000 described above is beneficial for improving the use safety and reliability of the electric device.

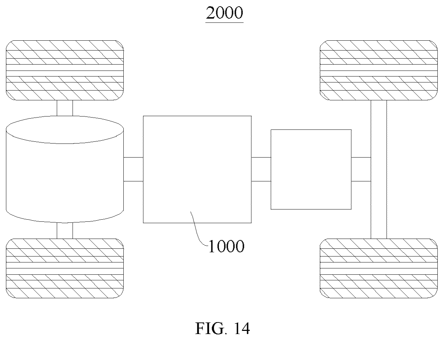

Optionally, as shown in FIG. 14, when the battery 1000 is used in a vehicle 2000, the battery 1000 may be provided at the bottom, the head, or the tail of the vehicle 2000. The battery 1000 may be configured to power the vehicle 2000. For example, the battery 1000 may serve as an operation power source of the vehicle 2000. The vehicle 2000 may further include a controller and a motor. The controller is configured to control the battery 1000 to supply power to the motor, e.g., for operation power needed for starting, navigating, and driving of the vehicle 2000.

In order to make the technical problems to be addressed, the technical solutions, and the beneficial effects of the embodiments of the present application more apparent, the present application is further described in detail below with reference to the drawings and examples. Apparently, the described examples are merely some examples of the present application, rather than all of the examples. The following description of at least one exemplary example is merely illustrative and is in no way intended to limit the present application and the application thereof. Based on the examples in the present application, all other examples obtained by those of ordinary skill in the art without creative work shall fall within the protection scope of the present application.

Example 1

1) Preparation of positive electrode plate

A positive electrode active material $LiNi_{0.8}Co_{0.1}Mn_{0.1}O_2$, a conductive agent Super P, and a binder polyvinylidene difluoride (PVDF) were prepared into a positive electrode slurry in N-methylpyrrolidone (NMP), where the solid content of the positive electrode slurry was 75 wt%, and the mass ratio of $LiNi_{0.8}Co_{0.1}Mn_{0.1}O_2$, Super P, and PVDF in the solid component was 8:1:1. The upper and lower surfaces of the current collector aluminum foil were coated with the positive electrode slurry, and the aluminum foil was then dried at 85 °C, followed by cold pressing, edge trimming, plate cutting, and slitting. Drying was then performed at 85 °C for 4 h under vacuum to prepare a positive electrode plate.

2) Preparation of negative electrode plate

A negative electrode active material (graphite and silicon oxide), a conductive agent Super P, a thickener carboxymethyl cellulose (CMC), and a binder styrene-butadiene rubber (SBR) were uniformly mixed in deionized water to prepare a negative electrode slurry, where the solid content of the negative electrode slurry was 50 wt%, the mass ratio of the negative electrode active material, Super P, CMC, and SBR in the solid component was 88:7:3:2, and based on the total mass of the negative electrode active material, the mass proportion of graphite was 95%, and the mass proportion of silicon oxide was 5%. The upper and lower surfaces of the current collector copper foil were coated with the negative electrode slurry, and the copper foil was then dried at 85 °C, followed by cold pressing, edge trimming, plate cutting, and slitting. Drying was then performed at 120 °C for 12 h under vacuum to prepare a negative electrode plate. The height $h_1$ of a first area of the negative electrode plate was 100 mm, and the height $h_2$ of a second area was 7 mm.

3) Preparation of electrolyte

In a glove box under argon atmosphere ($H_2O$ < 0.1 ppm, $O_2$ < 0.1 ppm), a fully dried electrolyte salt $LiPF_6$ was dissolved in a mixed solvent (the mixed solvent included ethylene carbonate (EC) and diethyl carbonate (DEC), and the ethylene carbonate (EC) and the diethyl carbonate (DEC) were mixed in a mass ratio of 50:50), and the mixture was uniformly mixed to obtain a liquid electrolyte at a concentration of 1 mol/L.

4) Separator

A 16 μm polyethylene film was used as a separator.

5) Preparation of lithium-ion battery

The positive electrode plate, the separator, and the negative electrode plate were stacked in sequence, with the separator positioned between the positive electrode plate and the negative electrode plate to isolate the positive electrode and the negative electrode. The stack was wound to obtain a bare cell. The bare cell was welded to the tabs and placed in an aluminum housing, and the electrolyte prepared above was injected into the dried housing. After procedures including packaging, standing, formation, shaping, capacity testing, etc., the preparation of a lithium-ion battery was completed (the thickness of the lithium-ion battery was 31 mm, the width was 237.5 mm, and the length was 117.4 mm).

The preparation methods for the batteries in Examples 2-17 and Comparative Examples 1-2 are the same as those in Example 1, and the differences are detailed in Table 1.

Table 1

| | First area | | | | | Second area | | | | | b-a/$\mu$m |
|---|---|---|---|---|---|---|---|---|---|---|---|
| | First active material | Mass proportions of graphite and silicon oxide based on total mass of first active material | Mass per unit area of first active material $w_1$ (g/m$^2$) | Volume expansion rate of first active material $v_1$/% | Thickness b of first area in a fully charged state /$\mu$m | Second active material | Mass proportions of graphite and silicon oxide based on total mass of second active material | Mass per unit area of second active material $w_2$ (g/m$^2$) | Volume expansion rate of second active material $v_1$/% | Thickness a of second area in a fully charged state /$\mu$m | |
| Comparative Example 1 | Graphite + silicon oxide | 95%+5% | 150 | 40 | 234 | Graphite + silicon oxide | 95%+5% | 150 | 40 | 234 | 0 |
| Comparative Example 2 | Graphite + silicon oxide | 95%+5% | 152 | 40 | 237 | Graphite + silicon oxide | 95%+5% | 150 | 40 | 234 | 3 |
| Example 1 | Graphite + silicon oxide | 95%+5% | 153 | 40 | 239 | Graphite + silicon oxide | 95%+5% | 150 | 40 | 234 | 5 |
| Example 2 | Graphite + silicon oxide | 95%+5% | 156 | 40 | 244 | Graphite + silicon oxide | 95%+5% | 150 | 40 | 234 | 10 |
| Example 3 | Graphite + silicon oxide | 95%+5% | 160 | 40 | 249 | Graphite + silicon oxide | 95%+5% | 150 | 40 | 234 | 15 |
| Example 4 | Graphite + silicon oxide | 95%+5% | 150 | 40 | 234 | Graphite + silicon oxide | 95%+5% | 147 | 40 | 229 | 5 |
| Example 5 | Graphite + silicon oxide | 95%+5% | 150 | 40 | 234 | Graphite + silicon oxide | 95%+5% | 144 | 40 | 224 | 10 |
| Example 6 | Graphite + silicon oxide | 95%+5% | 150 | 40 | 234 | Graphite + silicon oxide | 95%+5% | 140 | 40 | 219 | 15 |

(continued)

| | First area | | | | | Second area | | | | | |
|---|---|---|---|---|---|---|---|---|---|---|---|
| | First active material | Mass proportions of graphite and silicon oxide based on total mass of first active material | Mass per unit area of first active material $w_1$ (g/m²) | Volume expansion rate of first active material $v_1$/% | Thickness b of first area in a fully charged state /μm | Second active material | Mass proportions of graphite and silicon oxide based on total mass of second active material | Mass per unit area of second active material $w_2$ (g/m²) | Volume expansion rate of second active material $v_1$/% | Thickness a of second area in a fully charged state /μm | b-a/μm |
| Example 7 | Graphite + silicon oxide | 95%+5% | 150 | 40 | 234 | Graphite + silicon oxide | 95%+5% | 137 | 40 | 214 | 20 |
| Example 8 | Graphite + silicon oxide | 95%+5% | 150 | 40 | 234 | Graphite | 100% | 150 | 30 | 210 | 24 |
| Example 9 | Graphite + silicon oxide | 80%+20% | 150 | 75 | 255 | Graphite + silicon oxide | 97%+3% | 150 | 38 | 222 | 33 |
| Example 10 | Graphite + silicon oxide | 80%+20% | 150 | 75 | 255 | Graphite + silicon oxide | 90%+10% | 150 | 50 | 234 | 21 |
| Example 11 | Graphite + silicon oxide | 80%+20% | 150 | 75 | 255 | Graphite + silicon oxide | 85%+15% | 150 | 62 | 245 | 10 |
| Example 12 | Graphite + silicon oxide | 90%+10% | 150 | 50 | 234 | Graphite + silicon oxide | 95%+5% | 150 | 40 | 234 | 0 |
| Example 13 | Graphite + silicon oxide | 85%+15% | 150 | 62 | 245 | Graphite + silicon oxide | 95%+5% | 150 | 40 | 234 | 11 |
| Example 14 | Graphite + silicon oxide | 80%+20% | 150 | 75 | 255 | Graphite + silicon oxide | 95%+5% | 150 | 40 | 234 | 21 |

| | | First area | | | | | Second area | | | | | |
|---|---|---|---|---|---|---|---|---|---|---|---|---|
| | First active material | Mass proportions of graphite and silicon oxide based on total mass of first active material | Mass per unit area of first active material $w_1$ (g/m$^2$) | Volume expansion rate of first active material $v_1$/% | Thickness b of first area in a fully charged state /$\mu$m | Second active material | Mass proportions of graphite and silicon oxide based on total mass of second active material | Mass per unit area of second active material $w_2$ (g/m$^2$) | Volume expansion rate of second active material $v_1$/% | Thickness a of second area in a fully charged state /$\mu$m | b-a/$\mu$m |
| Example 15 | Graphite + silicon oxide | 75%+25% | 150 | 86 | 265 | Graphite + silicon oxide | 85%+15% | 150 | 62 | 245 | 20 |
| Example 16 | Graphite + silicon oxide | 70%+30% | 150 | 95 | 275 | Graphite + silicon oxide | 85%+15% | 150 | 62 | 245 | 30 |
| Example 17 | Graphite | - | 150 | 30 | 210 | Graphite (with surface coated with carbon nanotubes) | - | 150 | 23 | 195 | 15 |

Performance Testing

1. Test method for determining whether an anti-explosion valve cracks

At 45 °C, a battery was charged and discharged at a constant current of 0.33C, and the state of the anti-explosion valve was checked every 50 cycles to observe whether the anti-explosion valve cracked and leaked liquid.

2. Test method for energy density

At 25 °C, a battery was charged and discharged at a constant current of 0.33C, and the charging and discharging tests were performed within 2.8 V to 4.25 V to obtain the capacity of the battery. The capacity was divided by the dimension (length, width, and height) of the battery to obtain the energy density in Wh/L.
The test results of the batteries in Examples 1-17 and Comparative Examples 1-2 are shown in Table 2.

Table 2

|  | Battery | |
| --- | --- | --- |
|  | Whether the anti-explosion valve cracks | Energy density/Wh/L |
| Comparative Example 1 | Crack | 700 |
| Comparative Example 2 | Crack | 703 |
| Example 1 | Not crack | 706 |
| Example 2 | Not crack | 710 |
| Example 3 | Not crack | 714 |
| Example 4 | Not crack | 698 |
| Example 5 | Not crack | 696 |
| Example 6 | Not crack | 693 |
| Example 7 | Not crack | 690 |
| Example 8 | Not crack | 730 |
| Example 9 | Not crack | 733 |
| Example 10 | Not crack | 737 |
| Example 11 | Not crack | 740 |
| Example 12 | Not crack | 741 |
| Example 13 | Not crack | 745 |
| Example 14 | Not crack | 750 |
| Example 15 | Not crack | 755 |
| Example 16 | Not crack | 760 |
| Example 17 | Not crack | 685 |

Conclusion: As can be seen from Table 2, according to the present application, by allowing b - a $\geq$ 5 $\mu$m, the probability of cracking of the pressure relief mechanism can be reduced.
As can be seen from Examples 1-7, when the type of the first active material is the same as that of the second active material, by adjusting the content of the first active material or the second active material, the thicknesses of the first area and the second area after full charge can be made different, thereby reducing the tension on the pressure relief mechanism caused by the area of the housing proximal to the first wall part, and reducing the probability of cracking of the pressure relief mechanism.
As can be seen from Examples 8-16, by adjusting the relative content of the silicon-based material in the first active material and the second active material, the thicknesses of the first area and the second area after full charge can be made different, thereby reducing the tension on the pressure relief mechanism caused by the area of the housing proximal to the first wall part, and reducing the probability of cracking of the pressure relief mechanism.
As can be seen from Example 17, when the first active material and the second active material include only graphite, graphite with a high volume expansion rate may be used in the first area, and graphite with a low volume expansion rate may be used in the second area, so that the thicknesses of the first area and the second area after full charge can be made different, thereby reducing the tension on the pressure relief mechanism caused by the area of the housing proximal to the first wall part, and reducing the probability of cracking of the pressure relief mechanism.

Finally, it should be noted that the above examples are only used to illustrate the technical solutions of the present application, rather than limit same. Although the present application has been described in detail with reference to the foregoing examples, those of ordinary skill in the art should understand that modifications can still be made to the technical solutions recorded in the foregoing examples, or equivalent substitutions to some or all of the technical features can be made. However, such modifications or substitutions do not make the spirit of the corresponding technical solutions deviate from the scope of the technical solutions in the examples of the present application, and shall all fall within the scope of claims and specification of the present application. In particular, the technical features mentioned in the examples can be combined in any manner, provided that there is no structural conflict. The present application is not limited to the specific examples disclosed herein but includes all the technical solutions that fall within the scope of the claims.

## Claims

1. A battery cell, comprising:

   a housing comprising a first wall part;
   a pressure relief mechanism arranged on the first wall part; and
   an electrode assembly accommodated in the housing, wherein the electrode assembly comprises at least one negative electrode plate; the first wall part is arranged facing an edge of the negative electrode plate, an active material layer is formed on at least one side of the negative electrode plate, the active material layer comprises a first area and a second area arranged in a first direction, the second area is closer to the first wall part than the first area, the first direction is parallel to a thickness direction of the first wall part, and in a fully charged state, a thickness of the second area is a $\mu$m, a thickness of the first area is b $\mu$m, and the following condition is satisfied: b - a $\geq$ 5 $\mu$m.

2. The battery cell according to claim 1, wherein 10 $\mu$m $\leq$ b - a $\leq$ 33 $\mu$m.

3. The battery cell according to claim 1 or 2, wherein 210 $\mu$m $\leq$ a $\leq$ 275 $\mu$m, and 195 $\mu$m $\leq$ b $\leq$ 245 $\mu$m.

4. The battery cell according to any one of claims 1-3, wherein the first area comprises a first active material, and the second area comprises a second active material; a mass per unit area of the first active material in the first area is $w_1$ g/m$^2$, a volume expansion rate of the first active material is $v_1$, a mass per unit area of the second active material in the second area is $w_2$ g/m$^2$, and a volume expansion rate of the second active material is $v_2$, wherein $v_1 > v_2$ under the condition that $w_1 = w_2$.

5. The battery cell according to claim 4, wherein both the first active material and the second active material comprise a silicon-based material, and a mass proportion of the silicon-based material in the first active material is greater than a mass proportion of the silicon-based material in the second active material.

6. The battery cell according to claim 4, wherein the mass proportion of a silicon-based material in the first active material is less than or equal to 30%, and the mass proportion of a silicon-based material in the second active material is less than or equal to 15%.

7. The battery cell according to claim 4 or 5, wherein both the first active material and the second active material comprise graphite, and a volume expansion rate of the graphite in the first active material is greater than a volume expansion rate of the graphite in the second active material.

8. The battery cell according to any one of claims 1-3, wherein a type of an active material in the first area is the same as that in the second area, a mass per unit area of a first active material in the first area is $w_1$ g/m$^2$, a mass per unit area of a second active material in the second area is $w_2$ g/m$^2$, and $w_1 > w_2$.

9. The battery cell according to any one of claims 4-8, wherein values of $w_1$ and $w_2$ satisfy at least one of the following conditions:

$$140 \text{ g/m}^2 \le w_1 \le 200 \text{ g/m}^2;$$

$$112 \text{ g/m}^2 \le w_2 \le 180 \text{ g/m}^2.$$

10. The battery cell according to any one of claims 1-9, wherein in the first direction, a height of the first area is $h_1$, a height of the second area is $h_2$, and $5 \le h_1/h_2 \le 30$.

11. The battery cell according to any one of claims 1-10, wherein values of $h_1$ and $h_2$ satisfy at least one of the following conditions:

     60 mm $\le h_1 \le$ 120 mm, optionally 80 mm $\le h_1 \le$ 100 mm;
     2 mm $\le h_2 \le$ 15 mm, optionally 5 mm $\le h_2 \le$ 10 mm.

12. The battery cell according to any one of claims 1-11, wherein the electrode assembly further comprises at least one positive electrode plate, a polarity of the positive electrode plate is opposite to that of the negative electrode plate, the positive electrode plate and the negative electrode plate are arranged in a stacked manner in a second direction, and the second direction intersects with the first direction.

13. The battery cell according to any one of claims 1-11, wherein the electrode assembly further comprises at least one positive electrode plate, a polarity of the positive electrode plate is opposite to that of the negative electrode plate, and the positive electrode plate and the negative electrode plate are arranged in a winding manner.

14. The battery cell according to any one of claims 1-13, wherein the pressure relief mechanism is integrally formed with the first wall part.

15. The battery cell according to claim 14, wherein the first wall part comprises a weakened zone and a non-weakened zone, the weakened zone is arranged along an edge of the pressure relief mechanism and connects the pressure relief mechanism and the non-weakened zone, and the weakened zone is configured to crack when pressure of the battery cell is relieved.

16. The battery cell according to claim 15, wherein the first wall part is provided with a score groove, and the weakened zone is formed in the first wall part at an area where the score groove is provided.

17. The battery cell according to claim 16, wherein the score groove is a groove extending along a closed trajectory.

18. The battery cell according to any one of claims 1-13, wherein the pressure relief mechanism is arranged separately from the first wall part, the first wall part is provided with a through hole, and the pressure relief mechanism is mounted in the through hole.

19. The battery cell according to any one of claims 1-18, wherein the housing comprises a housing body and an end cover, at least one side of the housing body is provided with an opening, the end cover is connected to the housing body and is configured to close the opening, and the first wall part is formed in the housing body.

20. The battery cell according to claim 19, wherein two opposite sides of the housing body are each provided with an opening, and two end covers are configured to close the openings on corresponding sides.

21. The battery cell according to any one of claims 12-20, wherein the end cover is provided with an electrical connection part, and the electrical connection part is electrically connected to the positive electrode plate, or the electrical connection part is electrically connected to the negative electrode plate.

22. The battery cell according to any one of claims 1-21. wherein the first wall part is configured to support the electrode assembly and is located below the electrode assembly.

23. The battery cell according to any one of claims 1-22, wherein the housing further comprises a second wall part, a third wall part, and a fourth wall part; the fourth wall part and the first wall part are arranged opposite to each other in the first direction, the second wall part and the third wall part are arranged opposite to each other in the second direction, and the first wall part, the second wall part, the fourth wall part, and the third wall part are connected end to end in sequence.

24. The battery cell according to claim 23, wherein in the first direction, a minimum distance between the first wall part and the fourth wall part is $L_1$; a minimum distance between the second wall part and the third wall part is $L_2$, and the following condition is satisfied: $L_1 > L_2$.

25. The battery cell according to any one of claims 1-24, wherein a material of the housing comprises at least one of aluminum, nickel-plated carbon steel, stainless steel, a magnesium alloy, a nickel alloy, a copper alloy, and a zirconium alloy.

26. The battery cell according to any one of claims 12-25, wherein the positive electrode plate comprises a positive electrode current collector and a positive electrode active substance zone arranged on a surface of the positive electrode current collector, and a constituent material of the positive electrode current collector comprises an aluminum element with a mass percentage greater than or equal to 50%.

27. A battery, comprising the battery cell according to any one of claims 1-26.

28. An electric device, comprising the battery according to claim 27.

100

14

30

30

102

10

101

12

Upper

F1

Lower

Rear

Left

F2

40

11

Right

F3

Front

FIG. 1

FIG. 2

EP 4 664 597 A1

FIG. 3

FIG. 4

26

20

22

21

Front

F2

Rear

Left ← F3 → Right

FIG. 5

112    A    111

Rear

F2

Front

40    11

A

Left ← F3 → Right

FIG. 6

A–A

112   111                                          11

              41           40           41

Upper

F1

Lower

Front ←    → Rear
         F2

FIG. 7

40

412                           401

Rear

F2   411                                      411

Front

412

Left ←    → Right
         F3

FIG. 8

FIG. 9

FIG. 10

FIG. 11

FIG. 12

FIG. 13

2000

1000

FIG. 14

## INTERNATIONAL SEARCH REPORT

| International application No. |
|---|
| **PCT/CN2023/138895** |

| A. | CLASSIFICATION OF SUBJECT MATTER |
|---|---|

H01M10/058(2010.01)i; H01M4/133(2010.01)i; H01M4/134(2010.01)i; H01M10/0525(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT: 电池, 电极, 负极, 阳极, 厚度, 硅, 膨胀, 泄压, 薄弱, 第二, 满充, 充满, 充电, battery, electrode, negative, anode, thickness, Si, expansion, pressure, release, weak, second, fully charged

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 116885104 A (CONTEMPORARY AMPEREX TECHNOLOGY CO., LTD.) 13 October 2023 (2023-10-13) description, paragraphs [0057]-[0227], and figures 1-4 | 1-28 |
| X | CN 116565139 A (CONTEMPORARY AMPEREX TECHNOLOGY CO., LTD.) 08 August 2023 (2023-08-08) description, paragraphs [0003]-[0254], and figures 1-4 | 1-28 |
| A | CN 116845473 A (CONTEMPORARY AMPEREX TECHNOLOGY CO., LTD.) 03 October 2023 (2023-10-03) entire document | 1-28 |
| A | CN 115810717 A (CONTEMPORARY AMPEREX TECHNOLOGY CO., LTD.) 17 March 2023 (2023-03-17) entire document | 1-28 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 July 2024** | **29 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/138895**

| Patent document cited in search report | | | Publication date (day/month/year) | Patent family member(s) | | | Publication date (day/month/year) |
|---|---|---|---|---|---|---|---|
| CN | 116885104 | A | 13 October 2023 | CN | 116885104 | B | 08 December 2023 |
| CN | 116565139 | A | 08 August 2023 | CN | 116565139 | B | 29 September 2023 |
| CN | 116845473 | A | 03 October 2023 | CN | 116845473 | B | 23 February 2024 |
| CN | 115810717 | A | 17 March 2023 | WO | 2023202289 | A1 | 26 October 2023 |

Form PCT/ISA/210 (patent family annex) (July 2022)